# EUROPÄISCHE PATENTSCHRIFT

(11) **EP 1 617 948 B1**
(45) Veröffentlichungstag und Bekanntmachung des Hinweises auf die Patenterteilung: **13.07.2011**
(21) Anmeldenummer: 04725311.7
(22) Anmeldetag: 02.04.2004
(51) Int. Cl.: B01J 37/02

(54) **IN-SITU NEUBESCHICHTUNG VON KATALYSATORSCHÜTTUNGEN**
IN SITU RECOATING OF CATALYST BEDS
REENDUCTION IN SITU DE GARNISSAGES CATALYTIQUES DE COLONNE

(30) Priorität: 03.04.2003 DE 10315215
(43) Veröffentlichungstag der Anmeldung: 25.01.2006
(73) Patentinhaber: BASF SE, 67056 Ludwigshafen (DE)
(72) Erfinder: SACHWEH, Bernd, 67149 Meckenheim (DE); HUBER, Günther, 67117 Limburgerhof (DE); DUDA, Mark, 67071 Ludwigshafen (DE); MATTKE, Torsten, 67251 Freinsheim (DE); OLBERT, Gerhard, 69221 Dossenheim (DE)
(86) Internationale Anmeldenummer: PCT/EP2004/003497
(87) Internationale Veröffentlichungsnummer: WO 2004/087319

(56) Entgegenhaltungen:
- EP-A- 0 574 173
- WO-A-03/080893
- WO-A-2004/036004
- DE-A- 10 240 605
- US-A- 5 821 187
- US-A1- 2002 029 955

## Beschreibung

Die Erfindung betrifft ein Verfahren zur Beschichtung von Einbauten in einem Reaktor sowie eine Verwendung.

In der chemischen Verfahrenstechnik werden eine Vielzahl von Reaktionen in heterogener Katalyse durchgeführt, wobei der Katalysator vorwiegend als Feststoff, in seltenen Fällen auch als Flüssigkeit vorliegt und die Reaktanden und der Katalysator einander berührende, jedoch voneinander verschiedene Phasen sind.

Im Falle der heterogenen Katalyse erfolgt die Reaktion an der Oberfläche des Katalysators. Daher werden in Reaktoren zur Durchführung von heterogenkatalysierten Reaktionen Einbauten eingebracht, die eine möglichst große spezifische Oberfläche mit katalytischer Wirksamkeit aufweisen. Derartige Einbauten sind beispielsweise regellose Füllkörperschüttungen oder geordnete Packungen.

Füllkörperschüttungen bestehen aus einzelnen Füllkörpern, die als Vollkatalysatoren oder als geträgerte Katalysatoren ausgebildet sind. Dabei besteht bereits der einzelne Füllkörper aus katalytisch aktivem Material oder er wird durch Beschichtung eines inerten Trägers mit katalytisch aktivem Material hergestellt.

Es war demgegenüber Aufgabe der Erfindung, Einbauten, die bereits in Reaktoren zur Durchführung von heterogenkatalysierten Reaktionen eingebracht sind, mit katalytisch aktivem Material oder mit Vorstufen zur Bildung von katalytisch aktivem Material zu beschichten, das heißt eine in situ-Beschichtung von Einbauten in einem Reaktor zur Durchführung von heterogen katalysierten Reaktionen zu ermöglichen. Das Verfahren soll insbesondere eine Regenerierung von desaktiviertem Katalysator ermöglichen, ohne dass der Katalysator hierzu ausgebaut werden muss, und somit ohne nennenswerte Standzeitverluste für den Reaktor.

Aus US 5 821 187 ist ein solches Verfahren bekannt, ohne dass konkrete Maßnahmen zu dessen Durchführung gemacht werden.

Die Lösung besteht in einem Verfahren gemäß Anspruch 1.

Es wurde überraschend gefunden, dass es möglich ist, Einbauten in einem Reaktor zur Durchführung von heterogen katalysierten Reaktionen ohne zeit- und kostenaufwändigen Ausbau derselben im Reaktor selbst mit katalytisch aktivem Material oder einer Vorstufe zur Herstellung von katalytisch aktivem Material zu beschichten.

Dazu muss zunächst ein Aerosol bereitgestellt werden, das als disperse Phase das katalytisch aktive Material oder eine Vorstufe hierfür enthält. Als Aerosole werden im Allgemeinen kolloide Systeme aus Gasen mit darin verteilten kleinen festen oder flüssigen Partikeln mit einer Partikelgröße bis zu 10 µm bezeichnet. Als disperse Phase für das Aerosol wird das für die jeweilige Reaktion entsprechende katalytisch aktive Material ausgewählt, das in der Regel als Feststoff vorliegt. Dabei handelt es sich in der Regel nicht um reine Stoffe, da die meisten technischen Katalysatoren Misch- oder Mehrstoffkatalysatoren sind, das heißt neben der katalytisch wirksamen Substanz noch weitere Zusätze enthalten. Solche Zusätze können beispielsweise sogenannte Promotoren sein, welche die Katalysatorwirkung stärken. Zusätze können auch als sogenannte strukturelle Verstärker eine Sinterung mit einer damit verbundenen Verkleinerung der Oberfläche verhindern oder als Bindemittel wirken. Es ist auch möglich, anstelle von katalytisch wirksamen Substanzen Vorstufen hierfür einzusetzen, die erst in weiteren Verfahrensschritten in die katalytisch aktive Form übergeführt werden.

Das Aerosol kann vorteilhaft, ausgehend von dem als Feststoff vorliegenden katalytisch aktiven Material oder einer Vorstufe hierfür, das als Feststoff vorliegt, durch trockene Zerkleinerung desselben, bevorzugt in Stufen, und zwar durch Vorzerkleinerung, beispielsweise in einer Hammermühle und Feinstzerkleinerung in einer Strahlmühle, Dosierung, beispielsweise über einen Bürstendosierer, und Dispergieren des zerteilten Materials in einen Inertgasstrom, bevorzugt Stickstoff, erzeugt werden. Die Dosierung des katalytisch aktiven Materials in den Inertgasstrom soll bevorzugt in der Weise erfolgen, dass eine obere Beladungsgrenze des Aerosols mit disperser Phase, bei der das Aerosol noch pneumatisch förderbar ist, nicht überschritten wird.

Eine weitere, häufig eingesetzte Herstellungsmethode für Aerosole ist die Zerstäubung einer flüssigen Phase, die einen Feststoff in Lösung oder in Suspension enthalten kann oder die Zerstäubung einer Emulsion mittels Düsen. Dabei werden grobe Partikel, das heißt mit einer Partikelgröße oberhalb von etwa 10 µm, durch Trägheitsabscheidung abgetrennt und die feinen Partikel in einen Inertgasstrom eingedüst. Das flüssige Dispersionsmittel beziehungsweise Lösungsmittel wird vorzugsweise verdampft, insbesondere durch Trocknung oder durch Überhitzung.

Darüber hinaus sind auch weitere Verfahren zur Aerosolerzeugung einsetzbar, beispielsweise Desublimation aus der Gasphase, Flammensynthese oder Ultraschallzerstäubung.

Bevorzugt werden Aerosole mit einer Partikelgröße der dispersen Phase im Bereich von 0,1 bis 10 µm, besonders bevorzugt im Bereich von 0,5 bis 5 µm, erzeugt.

Das Aerosol wird nun durch den Reaktor geleitet, wobei man die Geschwindigkeit des Aerosols in der Weise einstellt, dass sich die disperse Phase an den Einbauten im Reaktor abscheidet. Die hierfür geeignete Aerosolgeschwindigkeit kann der Fachmann auf der Grundlage der bekannten Abscheidemechanismen unter Berücksichtigung der Partikeleigenschaften der dispersen Phase, insbesondere Partikelgrößenverteilung, Dichte, Form, elektrostatische Aufladung und Anteil der dispersen Phase im Aerosol bestimmen. Die wirksamen Abscheidemechanismen sind in der Fachliteratur beschrieben, beispielsweise in S. Löffler "Staubabscheiden", Georg Thieme Verlag, Stuttgart, 1988. Die Abscheidung kann aufgrund von Partikelträgheit, Diffusionsbewegung der Teilchen in Folge Brownscher Bewegung und Turbulenz, Sperreffekte, Schwerkraft und elektrostatischen Kräften erfolgen.

Bevorzugt stellt man beim erfindungsgemäßen Verfahren die Leerrohrgeschwindigkeit des Aerosols im Bereich von 0,1 bis 10 m/s, besonders bevorzugt von 0,2 bis 4 m/s, weiter bevorzugt von 0,2 bis 2 m/s, ein.

Der Begriff Leerrohrgeschwindigkeit bezeichnet dabei in bekannter Weise den Quotient aus dem Volumenstrom des Aerosols und der freien Querschnittsfläche des durchströmten Reaktors. Unter der freien Querschnittsfläche ist die für das Aerosol zugängliche Querschnittsfläche zu verstehen, das heißt Einbauten werden nicht zur freien Querschnittsfläche gerechnet.

Nach dem erfindungsgemäßen Verfahren können grundsätzlich alle Arten von Einbauten in Reaktoren beschichtet werden.

Bevorzugt kann es sich hierbei um Einbauten aus gegeneinander beweglichen Formkörpern handeln, die insbesondere als Festbett, als Wirbelschicht oder als Wanderbett vorliegen können.

Die zu beschichtenden Einbauten können auch als konsolidiertes, poröses, zumindest teilweise offenporiges System vorliegen, insbesondere als Gewebe, Gestrick, Geflecht oder als Schaumstoff, wobei elektrisch beheizbare Schaumstoffe ausgeschlossen sind. Vorliegend als konsolidiert ein System bezeichnet, dass aus einem durchgängig verbundenen Feststoff gebildet ist, der nur irreversibel in Einzelteile getrennt werden kann.

Nach dem erfindungsgemäßen Verfahren können auch Einbauten mit geordneten Strömungskanälen beschichtet werden, insbesondere geordnete Packungen oder Monolithe. Die geometrische Form der Strömungskanäle ist dabei grundsätzlich nicht eingeschränkt, möglich sind beispielsweise runde oder eckige Querschnitte derselben.

Die zu beschichtenden Einbauten können auch Rohre sein, insbesondere Rippenrohre, durch die ein Wärmeträger geleitet wird.

In vielen Anwendungsfällen liegt das auf den Einbauten abgeschiedene katalytisch aktive Material bereits in fertiger Form vor, in der ohne weitere Nachbehandlung die heterogen katalysierte Reaktion durchgeführt werden kann. In diesen Fällen ist in der Regel eine Haftung der abgeschiedenen dispersen Phase des Aerosols über van der Waals-Kräfte ausreichend. Es kann jedoch auch möglich sein, das die abgeschiedene disperse Phase anschließend weiteren Verfahrensschritten unterworfen wird, insbesondere dass sie aktiviert, fixiert und/oder kalziniert wird.

Es ist auch möglich, die Beschichtung mit Aerosol mehrlagig auszubilden, wobei die einzelnen, übereinander aufgebrachten Lagen gleich oder unterschiedlich sein können. Es ist beispielsweise möglich, zunächst eine Grundschicht als Haftschicht über ein geeignetes Aerosol und anschließend das eigentliche katalytisch aktive Material, insbesondere in einer Monoschicht, aufzubringen.

Es kann auch vorteilhaft sein, die zu beschichtenden Einbauten vor der Durchleitung des Aerosols vorzubehandeln, insbesondere elektrostatisch aufzuladen.

Nach dem erfindungsgemäßen Verfahren kann eine Erstbeschichtung von Einbauten in Reaktoren durchgerührt werden.

Ein besonderer Vorteil des erfindungsgemäßen Verfahrens ist es jedoch, dass es sich zur Reaktivierung von desaktivierten Katalysatoren in situ, das heißt ohne zeit- und kostenaufwändigen Ausbau derselben aus dem Reaktor, eignet. Dadurch werden Katalysatorkosten eingespart sowie Kosten durch den Produktionsausfall infolge des Stillstands des Reaktors während des Katalysatorwechsels und Kosten für den Aus- und Einbau des Katalysatormaterials.

Das Einfüllen von katalytischen Füllkörperschüttungen in Reaktionsrohre, sogenannten Kontaktrohren, ist in der Regel sehr aufwändig, insbesondere wenn aufgrund des Reaktionsprofils unterschiedlich zusammengesetzte Mischungen aus inertem Material und aktiver Katalysatorsubstanz über die Länge des Kontaktrohrs verteilt eingefüllt werden müssen. Auch muss in Reaktoren mit einer Vielzahl von Kontaktrohren ein Druckverlustabgleich der Kontaktrohre erfolgen, um eine gleichmäßige Durchströmung aller Kontaktrohre zu gewährleisten. Beim erfindungsgemäßen Verfahren wird durch die Reaktivierung von desaktiviertem Katalysatormaterial in situ dieser Aufwand für die Neubefüllung von Kontaktrohren vermieden.

Vorteilhaft können für den Transport des Aerosols die bereits installierten Anlagenteile, insbesondere der Verdichter, genutzt werden.

Das erfindungsgemäße Verfahren ist besonders geeignet zur Verwendung in Reaktoren zur Durchführung von Oxidations- und Dehydrierreaktionen, bevorzugt zur Synthese von Maleinsäureanhydrid, Phathalsäureanhydrid, Acrolein, (Meth)acrylsäure oder Ethylenoxid.

Die Erfindung wird im Folgenden anhand einer Zeichnung sowie von Ausführungsbeispielen näher erläutert.

Es zeigen im Einzelnen:
- Figur 1: die Prinzipsskizze einer Labor-Versuchsanlage zur Beschichtung einer Füll- körperschüttung,
- Figur 2: die graphische Darstellung der Partikelgrößenverteilung für ein Natrium- chlorid-Testaerosol (Kurve I) bzw. für ein Aerosol mit einem Katalysator zur Herstellung von Maleinsäureanhydrid als disperser Phase,
- Figur 3: eine graphische Darstellung der prozentualen Anteile von abgeschiedenem Natriumchlorid pro Segment der Füllkörperkolonne und
- Figuren 4a und 4b: analoge graphische Darstellungen wie in Figur 3, jedoch auf Füllkörpern mit anderen geometrischen Abmessungen.

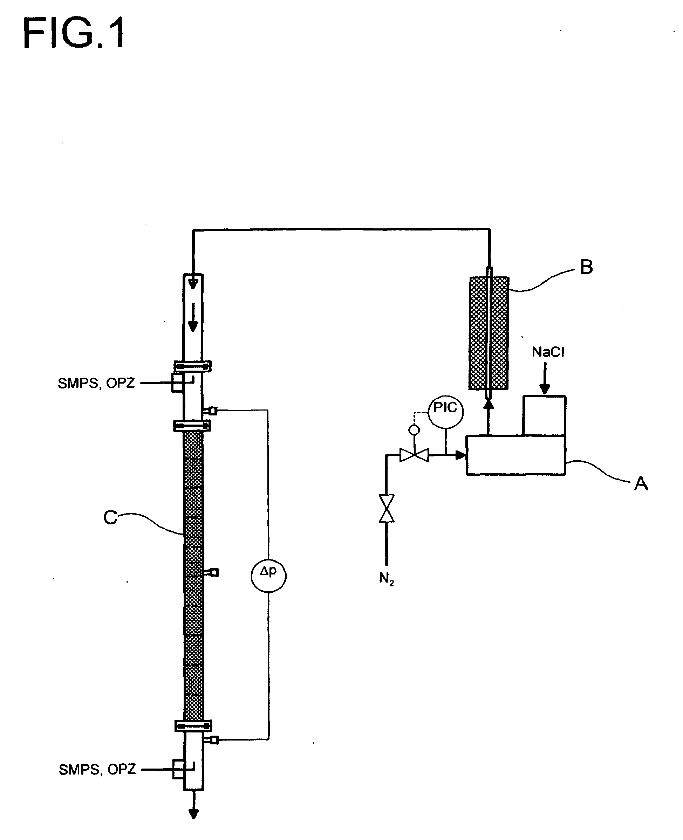

Die in Fig. 1 dargestellte Versuchsanordnung umfasst einen Collison-Aerosolgenerator A, in dem eine wässrige Natriumchloridlösung, NaCl, in bekannter Weise über eine Zweistoffdüse mittels eines Stickstoffstroms, N₂, zerstäubt wird. Dabei werden grobe Tropfen durch Einwirkung der Schwerkraft und Impaktion abgeschieden, feinere Tropfen treten mit dem Inertgasstrom aus dem Collison-Aerosolgenerator A aus und werden im nachgeschalteten Diffusionstrockner B getrocknet unter Ausbildung eines Natriumchloridaerosols mit fester disperser Phase. Das so erzeugte Aerosol wird zur Messung der Partikelkonzentration und Partikelgrößenverteilung durch zwei Partikelzähler geleitet, und zwar einen optischen Partikelzähler, OPZ, mit einem Messbereich von 0,2 bis 20 µm sowie einen Scanning Mobility Particle Sizer, SMPS, mit einem Messbereich von etwa 15 bis 800 nm.

Es wurde ein optischer Partikelzähler (OPZ) der Palas GmbH, Karlsruhe eingesetzt, mit den folgenden technischen Daten:

| | |
|---|---|
| Absaugvolumenstrom: | variabel bis ca. 300 l/h, |
| Druckbereich: | bis 100 mbar, |
| Temperaturbereich: | 0 bis 100°C, und |
| Messbereich: | 0,2 bis 20 µm; bis 10⁵ Partikel pro cm³ |

Charakteristisch für die Funktionsweise aller optischen Partikelzähler ist die Abgrenzung eines kleinen, homogen beleuchteten Messvolumens, durch das sich die Partikeln einzeln bewegen müssen. Die Intensität des Streulichts, das sie hierbei aussenden, ist ein Maß für die Partikelgröße. Die Zuordnung von Streulichtintensität und Partikelgröße erfolgt dabei durch eine experimentelle Kalibrierung mit einem Prüfaerosol. Darüber hinaus werden die Partikel gezählt, woraus die Anzahlkonzentration berechnet werden kann.

Zur Bestimmung von Partikelgrößenverteilung und Partikelkonzentration im Nanometerbereich (15 bis 800 nm) wurde das Aerosol zusätzlich durch einen Scanning Mobility Particle Sizer (SMPS) der TSI Inc., St. Paul, USA geleitet, mit folgenden technischen Daten:

| | |
|---|---|
| Absaugvolumenstrom: | typischerweise 18 l/h, |
| Druckbereich: | bis 100 mbar, |
| Temperaturbereich: | 0 bis 100°C, und |
| Messbereich: | 15 bis 800 nm; bis 10⁸ Partikel/cm³ |

Das Messprinzip des SMPS beruht auf einer elektrostatischen Klassierung in monodisperse Größenfraktionen, die anschließend zur Messung der Anzahlkonzentration durch einen Kondensationspartikelzähler geleitet werden. Durch Veränderung der am Klassiergerät angelegten Spannung werden die vom Gerät erfassten Partikelgrößenfraktionen verändert.

Der so charakterisierte Aerosolstrom wurde anschließend durch ein Glasrohr mit 1 m Länge und 26 mm Innendurchmesser durchgeleitet. Im Glasrohr waren hintereinander 10 Horden gleicher Länge angeordnet, die jeweils die Füllkörperschüttung enthielten. Die Horden sind nach dem Versuch einzeln aus dem Glasrohr entnehmbar, wodurch es möglich ist, die jeweils abgeschiedene Aerosolmenge zu bestimmen. Der aus dem Glasrohr austretende Aerosolstrom wurde wieder mittels eines optischen Partikelzählers, OPZ, sowie eines SMPS charakterisiert.

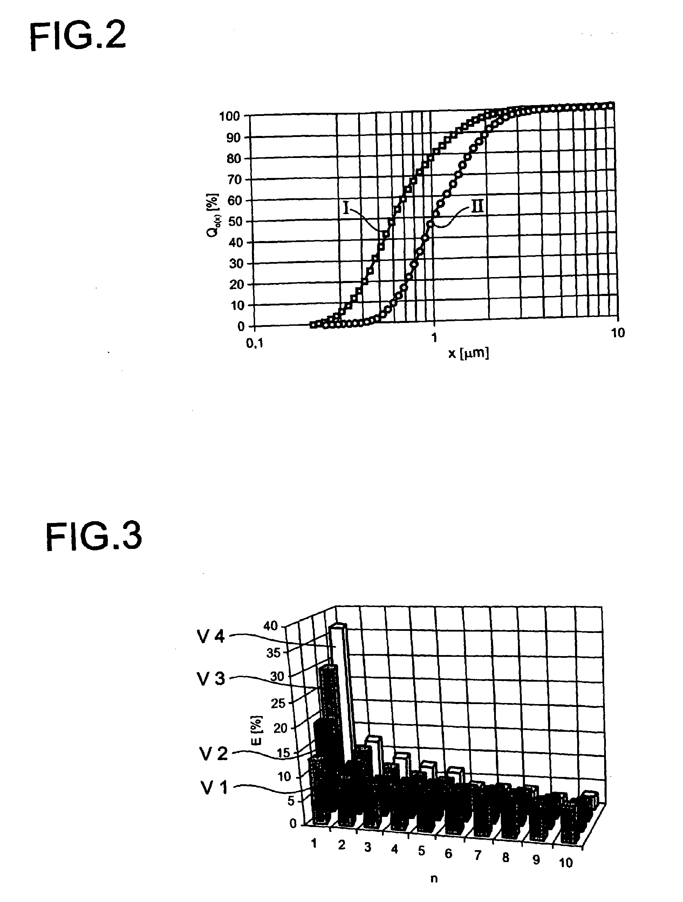

Fig. 2 zeigt die mit dem optischen Partikelzähler gemessene Partikelgrößenverteilung für das Aerosol vor der Durchleitung durch das Glasrohr mit Füllkörperschüttung und zwar die gemessene Anzahlanteilsummenverteilung, Q₀₍ₓ₎ in %, in Abhängigkeit von der Partikelgröße in µm.

Die obere Kurve I zeigt die Partikelgrößenverteilung für ein Natriumchlorid-Testaerosol mit einer Feststoffkonzentration im Aerosol von 285 mg/m³, das aus einer Natriumchlorid-Ausgangslösung erhalten wurde. Die untere Kurve II zeigt die gemessene Partikelgrößenverteilung für ein Aerosol, das als disperse Phase den für die katalytische Oxidation zur Herstellung von Maleinsäureanhydrid üblicherweise eingesetzten Katalysator auf Vanadium-Phosphor-Sauerstoff-Basis enthielt.

Die Figur 3 zeigt die Versuchsergebnisse der nachfolgend beschriebenen Versuche V1 bis V4, und zwar die relative Abscheidemenge E (Abscheidemenge pro Segment bezogen auf die gesamte abgeschiedene Menge) in % für jedes der n Segmente 1 bis 10 der Füllkörperschüttung.

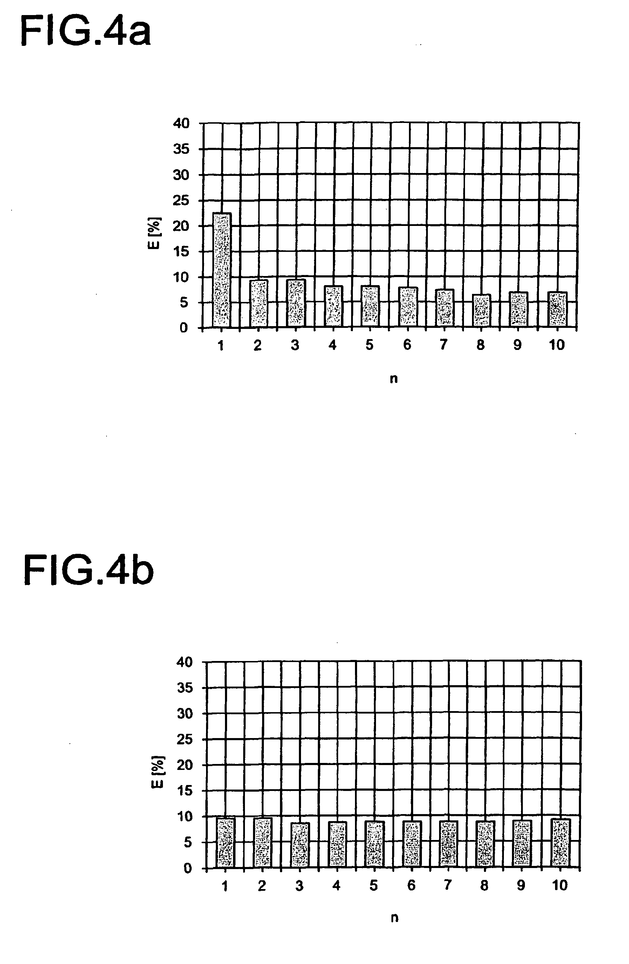

Analog zeigen die Fig. 4a und 4b die Versuchsergebnis der nachstehend beschriebenen Versuche V5 bzw. V6, und zwar ebenfalls die relative Abscheidemenge E in % für jedes der n Segmente 1 bis 10 der Füllkörperschüttung.

### Ausführungsbeispiele

Es wurden Laborversuche zur Bestimmung der Abscheidung von Aerosolen in einer Füllkörperschüttung mit einer in Fig. 1 dargestellten Versuchsanordnung durchgeführt.

Als Füllkörper wurden ringförmige Steatit-Tabletten eingesetzt, und zwar für die Versuche V1 bis V4 mit den für den Katalysatorträger zur Herstellung von Maleinsäureanhydrid typischen Maßen 5 x 3 x 2 (Außendurchmesser x Höhe x Innendurchmesser), bzw. in den Versuche V5 und V6 mit den für den Katalysator zur Herstellung von Methacrylsäure typischen Maßen von 8 x 6 x 5 (Außendurchmesser x Höhe x Innendurchmesser).

In allen Versuchen V1 bis V6 wurde ein Natriumchlorid-Testaerosol eingesetzt.

Nach Durchströmung der Füllkörperschüttung durch das Aerosol wurde das abgeschiedene Natriumchlorid von jedem Segment einzeln abgewaschen und die abgeschiedene Natriumchloridmenge durch Leitfähigkeitsmessung bestimmt.

Durch Messung der Partikelgrößenverteilung und Anzahlkonzentration vor und nach Durchströmung der Füllkörperschüttung kann der Anteil des abgeschiedenen Aerosols über die gesamte Länge der Schüttung nach Partikelgrößenklassen bestimmt werden.

In den Versuchen V 1 bis V4 wurden ringförmige Steatit-Tabletten mit den Maßen 8 x 6 x 5 (Außendurchmesser x Höhe x Innendurchmesser), entsprechend den Abmessungen des üblichen Katalysators für die Herstellung von Methacrylsäure eingesetzt.

In der nachfolgenden Tabelle sind die Konzentrationen der Natriumchlorid-Ausgangslösung, in Gew.-%, aus der die Natriumchlorid-Testaerosole im Collison-Aerosolgenerator erzeugt wurden, sowie die Aerosolgeschwindigkeiten, in m/s, aufgeführt:

| **Versuche** | **V1** | **V2** | **V3** | **V4** |
|---|---|---|---|---|
| Konzentration Natriumchlorid-Ausgangslösung, in Gew.-% | 1 Gew.-% | 1 Gew.-% | 5 Gew.-% | 5 Gew.% |
| Aerosol-Geschwindigkeit, in m/s | 1 m/s | 2 m/s | 1 m/s | 2 m/s |

Die Versuchsergebnisse sind in Figur 3 dargestellt, und zwar jeweils die relative Abscheidemenge E in % für jedes der n Segmente 1 bis 10. Dabei stellt die vorderste, mit V1 bezeichnete Balkenreihe die Ergebnisse des Versuchs V1 und analog die dahinterliegenden Balkenreihen V2 bis V4 jeweils die Ergebnisse für die Versuche V2 bis V4 dar. Die Versuche zeigen, dass die Abscheidung in Form einer Expotentialkurve erfolgt, wobei die Expotentialkurve mit zunehmender Konzentration der Natriumchlorid-Ausgangslösung sowie Aerosolgeschwindigkeit steiler wird.

In den Versuchen V5 und V6 wurden ringförmige Steatit-Tabletten mit anderen geometrischen Abmessungen, und zwar den Abmessungen 5 x 3 x 2 (Außendurchmesser x Höhe x Innendurchmesser); entsprechend den Abmessungen des üblichen Katalysators für die oxidative Herstellung von Maleinsäureanhydrid, eingesetzt.

Der Gesamtabscheidegrad in V5 bestimmt durch Differenzmessung vor und nach der Füllkörperschüttung mittels optischer Partikelzähler betrug 50 %. Es wurden ringförmige Steatit-Tabletten mit den Maßen 5 x 3 x 2 (Außendurchmesser x Höhe x Innendurch-messer) eingesetzt und ein Natriumchlorid-Testaersol, das ausgehend von einer 1 %igen Natriumchlorid-Ausgangslösung erhalten wurde. Die Aerosol-Leerrohrgeschwindigkeit betrug 1,74 m/s

Die Abscheidehäufigkeit pro Segment der Füllkörperschüttung ist in Fig. 4a dargestellt. Im Versuch V6 wurden Füllkörper mit derselben Geometrie eingesetzt, es wurde jedoch von einer niedrigeren Konzentration der Natriumchlorid-Ausgangslösung ausgegangen, und zwar von einer 0,5 Gew.-%igen Natriumchlorid-Lösung. Die Aerosol-Leerrohrgeschwindigkeit betrug 0,93 m/s. Der Gesamtabscheidegrad, gemessen mittels optischer Partikelzähler, analog zu Versuch V5, betrug 10 %.

Der Vergleich der Versuche V5 und V6 zeigt, dass je nach Anforderungen, unterschiedliche Verteilungen der abgeschiedenen Partikel über die Länge der Schüttung erreicht werden können. In Versuch V6 wurde beispielsweise eine nahezu gleichförmige Abscheidung über die gesamte Länge der Füllkörperschüttung erreicht.

## Patentansprüche

1. Verfahren zur Beschichtung von Einbauten in einem Reaktor, ausgenommen die Beschichtung von elektrisch beheizbaren, zumindest teilweise offenzelligen Schaumstoffen, mit einem katalytisch aktiven Material oder einer Vorstufe hierfür, wonach man ein Aerosol bereitstellt, das als disperse Phase das katalytisch aktive Material oder die Vorstufe hierfür enthält, wobei die disperse Phase des Aerosols eine PartikelgröBe im Bereich von 0,1 bis 10 µm aufweist und man das Aerosol mit einer Geschwindigkeit im Bereich von 0,2 bis 4 m/s durch den Reaktor leitet, die man so einstellt, dass sich die disperse Phase des Aerosols an den Einbauten im Reaktor abscheidet.

2. Verfahren nach Anspruch 1, **dadurch gekennzeichnet, dass** man das Aerosol mit einer Geschwindigkeit im Bereich von 0,2 bis 2 m/s durch den Reaktor leitet.

3. Verfahren nach Anspruch 1 oder 2, **dadurch gekennzeichnet, dass** die disperse Phase des Aerosols eine Partikelgröße im Bereich von 0,5 bis 5 µm aufweist.

4. Verfahren nach einem der Ansprüche 1 bis 3, **dadurch gekennzeichnet, dass** man das Aerosol durch trockene Verkleinerung eines Feststoffkatalysators oder einer Vorstufe für einen Feststoffkatalysator, insbesondere auf eine Partikelgröße im Bereich von 0,1 bis 10 µm, bevorzugt im Bereich von 0,2 bis 5 µm, Dosierung und Dispergieren in einen Inertgasstrom, insbesondere in eine Stickstoffstrom, erzeugt.

5. Verfahren nach einem der Ansprüche 1 bis 4, **dadurch gekennzeichnet, dass** man das Aerosol durch Zerstäubung mittels Düsen einer gegebenenfalls erhitzten Flüssigkeit oder eines Flüssigkeitsgemisches, oder einer gegebenenfalls überhitzten Lösung, Suspension oder Emulsion erzeugt.

6. Verfahren nach einem der Ansprüche 1 bis 5, **dadurch** gekenntzeichnet, dass die Einbauten aus gegeneinander beweglichen Formkörpern gebildet sind, die bevorzugt als Festbett, als Wirbelschicht oder als Wanderbett vorliegen.

7. Verfahren nach einem der Ansprüche 1 bis 5, **dadurch gekennzeichnet, dass** die Einbauten als konsolidiertes, poröses System vorliegen, insbesondere als Gewebe, Gestrick, Geflecht oder als Schaumstoff, ausgenommen elektrisch beheizbare Schaumstoffe.

8. Verfahren nach einem der Ansprüche 1 bis 5, **gekennzeichnet durch** Einbauten mit geordneten Strömungskanälen, wobei die Einbauten insbesondere geordnete Packungen oder Monolithe sind.

9. Verfahren nach einem der Ansprüche 1 bis 5, **dadurch gekennzeichnet, dass** die Einbauten Rohre, insbesondere Rippenrohre sind, durch die ein Wärmeträger geleitet wird.

10. Verfahren nach einem der Ansprüche 1 bis 9, **dadurch gekennzeichnet, dass** die auf den Einbauten im Reaktor abgeschiedene disperse Phase weiteren Verfahrensschritten unterworfen wird, insbesondere fixiert, aktiviert und/oder kalziniert wird.

11. Verfahren nach einem der Ansprüche 1 bis 10, **dadurch gekennzeichnet, dass** die Beschichtung eine Erstbeschichtung ist.

12. Verfahren nach einem der Ansprüche 1 bis 10, **dadurch gekennzeichnet, dass** die Beschichtung eine Reaktivierung von Katalysatormaterial auf der Oberfläche von Einbauten in einem Reaktor ist.

13. Verwendung des Verfahrens nach einem der Ansprüche 1 bis 12 zur Beschichtung von Einbauten in Reaktoren zur Durchführung von heterogenen Gasphasenreaktionen, insbesondere von Oxidations- oder Dehydrierreaktionen, bevorzugt zur Synthese von Maleinsäureanhydrid, Phathalsäureanhydrid, Acrolein, (Meth) acrylsäure oder Ethylenoxid.

## Claims

1. The process for coating internals in a reactor, except for the coating of electrically heatable, at least partly open-cell foams, with a catalytically active material or a precursor thereof, in which an aerosol comprising the catalytically active material or the precursor thereof as a disperse phase is provided, the disperse phase of the aerosol having a particle size of from 0.1 to 10 µm, and the aerosol is passed through the reactor at a velocity in the range from 0.2 to 4 m/s which is established so that the disperse phase of the aerosol is deposited on the internals in the reactor.

2. The process according to claim 1, wherein the aerosol is passed through the reactor at a velocity in the range from 0.2 to 2 m/s.

3. The process according to claim 1 or 2, wherein the disperse phase of the aerosol has a particle size of from 0.5 to 5 µm.

4. The process according to any of claims 1 to 3, wherein the aerosol is produced by dry comminution of a solid catalyst or of a precursor of a solid catalyst, in particular to a particle size of from 0.1 to 10 µm, preferably from 0.2 to 5 µm, metering and dispersing in an inert gas stream, in particular in a nitrogen stream.

5. The process according to any of claims 1 to 4, wherein the aerosol is produced by comminuting, by means of nozzles, a liquid which may have been heated or a liquid mixture, or a solution, suspension or emulsion which may have been superheated.

6. The process according to any of claims 1 to 5, wherein the internals are formed from moldings which are movable relative to one another and are preferably present in the form of a fixed bed, fluidized bed or moving bed.

7. The process according to any of claims 1 to 5, wherein the internals are present in the form of a consolidated, porous system, in particular in the form of woven fabric, knitted fabric, braid or foam, except for electrically heatable foams.

8. The process according to any of claims 1 to 5, which comprises internals having ordered flow channels, the internals being in particular stacked packings or monoliths.

9. The process according to any of claims 1 to 5, wherein the internals are pipes, in particular ribbed pipes, through which a heating medium is passed.

10. The process according to any of claims 1 to 9, wherein the disperse phase deposited on the internals in the reactor is subjected to further process steps, in particular is fixed, activated and/or calcined.

11. The process according to any of claims 1 to 10, wherein the coating is an initial coating.

12. The process according to any of claims 1 to 10, wherein the coating comprises a reactivation of catalyst material on the surface of internals in a reactor.

13. The use of the process according to any of claims 1 to 12 for coating internals in reactors for carrying out heterogeneous gas-phase reactions, in particular oxidation or dehydrogenation reactions, preferably for the synthesis of maleic anhydride, phthalic anhydride, acrolein, (meth) acrylic acid or ethylene oxide.

## Revendications

1. Procédé de revêtement de composants internes dans un réacteur, à l'exception du revêtement de mousses au moins partiellement à cellules ouvertes chauffables électriquement, avec un matériau catalytiquement actif ou un précurseur de celui-ci, selon lequel un aérosol est préparé, qui contient en tant que phase dispersée le matériau catalytiquement actif ou le précurseur de celui-ci, la phase dispersée de l'aérosol présentant une taille de particule dans la plage allant de 0,1 à 10 µm et l'aérosol étant conduit dans le réacteur à une vitesse dans la plage allant de 0,2 à 4 m/s, qui est ajustée de manière à ce que la phase dispersée de l'aérosol se dépose sur les composants internes dans le réacteur.

2. Procédé selon la revendication 1, **caractérisé en ce que** l'aérosol est conduit dans le réacteur à une vitesse dans la plage allant de 0,2 à 2 m/s.

3. Procédé selon la revendication 1 ou 2, **caractérisé en ce que** la phase dispersée de l'aérosol présente une taille de particule dans la plage allant de 0,5 à 5 µm.

4. Procédé selon l'une quelconque des revendications 1 à 3, **caractérisé en ce que** l'aérosol est formé par broyage à sec d'un catalyseur solide ou d'un précurseur d'un catalyseur solide, notamment à une taille de particule dans la plage allant de 0,1 à 10 µm, de préférence dans la plage allant de 0,2 à 5 µm, introduction et dispersion dans un courant de gaz inerte, notamment dans un courant d'azote.

5. Procédé selon l'une quelconque des revendications 1 à 4, **caractérisé en ce que** l'aérosol est formé par atomisation avec des buses d'un liquide ou mélange de liquides éventuellement chauffé, ou d'une solution, suspension ou émulsion éventuellement surchauffée.

6. Procédé selon l'une quelconque des revendications 1 à 5, **caractérisé en ce que** les composants internes sont formés par des corps moulés mobiles les uns contre les autres, qui se présentent de préférence sous la forme d'un lit fixe, d'un lit fluidisé ou d'un lit mobile.

7. Procédé selon l'une quelconque des revendications 1 à 5, **caractérisé en ce que** les composants internes se présentent sous la forme d'un système poreux consolidé, notamment sous la forme d'un tissu, d'un tricot, d'une maille ou sous la forme d'une mousse, à l'exception des mousses chauffables électriquement.

8. Procédé selon l'une quelconque des revendications 1 à 5, **caractérisé par** des composants internes comprenant des canaux d'écoulement ordonnés, les composants internes étant notamment des garnissages ordonnés ou des monolithes.

9. Procédé selon l'une quelconque des revendications 1 à 5, **caractérisé en ce que** les composants internes sont des tubes, notamment des tubes nervurés, dans lesquels un agent caloporteur est mis en circulation.

10. Procédé selon l'une quelconque des revendications 1 à 9, **caractérisé en ce que** la phase dispersée déposée sur les composants internes dans le réacteur est soumise à des étapes de procédé supplémentaires, notamment fixée, activée et/ou calcinée.

11. Procédé selon l'une quelconque des revendications 1 à 10, **caractérisé en ce que** le revêtement est un premier revêtement.

12. Procédé selon l'une quelconque des revendications 1 à 10, **caractérisé en ce que** le revêtement est une réactivation d'un matériau catalytique sur la surface de composants internes dans un réacteur.

13. Utilisation du procédé selon l'une quelconque des revendications 1 à 12 pour le revêtement de composants internes dans des réacteurs pour la réalisation de réactions hétérogènes en phase gazeuse, notamment de réactions d'oxydation ou de déshydrogénation, de préférence pour la synthèse d'anhydride de l'acide maléique, d'anhydride de l'acide phtalique, d'acroléine, d'acide (méth) acrylique ou d'oxyde d'éthylène.
